Europäisches Patentamt

European Patent Office

Office européen des brevets

(11) Veröffentlichungsnummer: **0 607 880 A1**

## (12) EUROPÄISCHE PATENTANMELDUNG

(21) Anmeldenummer: **94100498.8**

(51) Int. Cl.5: **G02B 6/42**

(22) Anmeldetag: **14.01.94**

(30) Priorität: **19.01.93 DE 4301236**

(43) Veröffentlichungstag der Anmeldung:
**27.07.94 Patentblatt 94/30**

(84) Benannte Vertragsstaaten:
**DK FR GB IT NL SE**

(71) Anmelder: **ANT Nachrichtentechnik GmbH**
**Gerberstrasse 33**
**D-71522 Backnang(DE)**

(72) Erfinder: **Kuke, Albrecht, Dr.**
**Nelkenweg 2**
**D-71549 Auenwald(DE)**
Erfinder: **Möss, Eberhard**
**Ludwig-Beck-Strasse 6**
**D-71540 Murrhardt(DE)**
Erfinder: **Scholz, Werner**
**Talstrasse 12**
**D-71554 Weissach i.T.(DE)**

(54) **Vorrichtung zur optischen Kopplung eines Lichtwellenleiters mit einem optoelektrischen Wandler.**

(57) Bei einer Vorrichtung zur optischen Kopplung eines Lichtwellenleiters (3,4) mit einem optoelektrischen Wandler (8), wobei von einer Stirnfläche (5) des Lichtwellenleiters (3,4) Licht auf die Lichteintrittsfläche des optoelektrischen Wandlers (8) fällt, verläuft die Stirnfläche (5) des Lichtwellenleiters (3,4) schräg. An der Oberfläche einer Trägerplatte (1) ist eine V-förmige Nut (2) angeordnet, die in eine Vertiefung (6) ausläuft mit einer der Nut (2) gegenüberliegenden zur Oberfläche der Trägerplatte schräg verlaufenden Wand (7), welche den optoelektrischen Wandler (8) derart trägt, daß die Lichteintrittsfläche und die Stirnfläche im gleichen Winkel zur Oberfläche verlaufen. Die Herstellung der Vorrichtung erfolgt vorzugsweise durch anisotropes Ätzen einer Silizium-Trägerplatte.

Fig. 1

Die Erfindung betrifft eine Vorrichtung zur optischen Kopplung eines Lichtwellenleiters mit einem optoelektrischen Wandler, wobei von einer Stirnfläche des Lichtwellenleiters Licht auf die Lichteintrittsfläche des optoelektrischen Wandlers fällt.

In der optischen Nachrichtentechnik ist es häufig erforderlich, einen optoelektrischen Wandler - meist eine Photodiode - mit einem möglichst hohen Kopplungswirkungsgrad an einen Lichtwellenleiter anzukoppeln. Dazu ist ein Verfahren zur aktiven Justage bekannt, bei welchem Licht in den Lichtwellenleiter eingekoppelt wird und das Ausgangssignal des optoelektrischen Wandlers während der Justage gemessen wird. Anschließend wird der Lichtwellenleiter mit geeignetem Kleber fixiert.

Bei der Verwendung von optoelektrischen Wandlern mit sehr kleinen Lichteintrittsflächen wird entweder eine Abbildungsoptik zwischen den Lichtwellenleiter und dem optoelektrischen Wandler verwendet (wie beispielsweise bei DE 35 43 558 A1 und DE 39 14 835 C1) oder die Stirnfläche des Lichtwellenleiters ist wegen der Aufweitung des austretenden Lichtes sehr nahe an den optoelektrischen Wandler heranzuführen. Letzteres erhöht die Genauigkeitsanforderungen und bei den bekannten Verfahren den Justage-Aufwand.

Aufgabe der vorliegenden Erfindung ist es, eine Vorrichtung zur optischen Verbindung eines Lichtwellenleiters mit einem optoelektrischen Wandler vorzuschlagen, bei welcher die Stirnfläche des Lichtwellenleiters sehr nahe an die Lichteintrittsfläche des optoelektrischen Wandlers herangeführt werden kann. Dabei soll möglichst eine arbeitsaufwendige Justage vermieden werden.

Die erfindungsgemäße Vorrichtung ist dadurch gekennzeichnet, daß die Stirnfläche des Lichtwellenleiters schräg verläuft und daß an der Oberfläche einer Trägerplatte eine V-förmige Nut angeordnet ist, die in eine Vertiefung ausläuft mit einer der Nut gegenüberliegenden zur Oberfläche der Trägerplatte schräg verlaufenden Wand, welche den optoelektrischen Wandler derart trägt, daß die Lichteintrittsfläche und die Stirnfläche im gleichen Winkel zur Oberfläche verlaufen.

Der Vorteil der erfindungsgemäßen Vorrichtung besteht darin, daß ohne aufwendige Justage der Lichtwellenleiter dicht an den optoelektrischen Wandler herangebracht werden kann. Dadurch können optoelektrische Wandler mit einer kleinen Lichteintrittsfläche von beispielsweise bis zu $14\mu m$ bei einem Kerndurchmesser von $10\mu m$ verwendet werden, was wiederum eine Verwendung von sehr schnellen optoelektrischen Wandlern ermöglicht.

Ein weiterer Vorteil der erfindungsgemäßen Vorrichtung besteht darin, daß durch die schräge Stirnfläche des Lichtwellenleiters Reflektionen von der Stirnfläche oder der Oberfläche des optoelektrischen Wandlers zurück in den Lichtwellenleiter vermieden werden, welche den Sende-Laser am anderen Ende des Lichtwellenleiters stören können.

Eine vorteilhafte Ausführungsform der Erfindung besteht darin, daß die Vertiefung die Form eines Pyramidenstumpfes aufweist, wobei eine parallel zur Oberfläche verlaufende Bodenfläche der Vertiefung und die schräg verlaufende Wand eine Anlagekante für den optoelektrischen Wandler bilden. Hierdurch ist ein optoelektrischer Wandler mit einer quadratischen oder rechteckigen Grundfläche sehr genau festgelegt, so daß keine weitere Justage erforderlich ist.

Bei einer anderen vorteilhaften Ausführungsform der Erfindung wird ein gewisser Freiheitsgrad des optoelektrischen Wandlers und damit eine Justiermöglichkeit dadurch zugelassen, daß die Vertiefung die Form einer Pyramide bildet.

Eine besonders hohe Genauigkeit der Winkel und der Abmessungen der Vertiefung und der V-förmigen Nut wird gemäß einer Weiterbildung der Erfindung dadurch erreicht, daß die Trägerplatte aus Silizium besteht und daß die Wände der V-förmigen Nut und die schräg verlaufende Wand jeweils mit der Oberfläche der Trägerplatte einen Winkel von 54,7° einschließen und daß der Winkel zwischen der Achse des Lichtwellenleiters und der Normalen der Stirnfläche des Lichtwellenleiters 35,3° beträgt.

Vorzugsweise ist bei der erfindungsgemäßen Vorrichtung vorgesehen, daß die nicht vom Lichtwellenleiter und vom optoelektrischen Wandler eingenommenen Teile der Nut und der Vertiefung von einem transparenten Kleber ausgefüllt sind. Dadurch wird insbesondere der Kopplungswirkungsgrad zwischen dem Lichtwellenleiter und dem optoelektrischen Wandler durch Vermeidung von Reflexionsverlusten erhöht.

Ein vorteilhaftes Verfahren zur Herstellung einer erfindungsgemäßen Vorrichtung ist dadurch gekennzeichnet, daß in eine Oberfläche eines Trägerplattenrohlings, die parallel zu einer (100)-Ebene liegt, die V-förmige Nut in Richtung parallel zu einer ⟨110⟩-Richtung anisotrop geätzt wird und daß die Vertiefung ebenfalls anisotrop geätzt wird. Bei einer Vertiefung in Form eines Pyramidenstumpfes wird vorzugsweise der Ätzprozeß bei Erreichen einer vorgesehenen Tiefe der Vertiefung beendet.

Die erfindungsgemäße Vorrichtung eignet sich in vorteilhafter Weise zur Ankopplung von optoelektrischen Wandlern, insbesondere Photodioden, an als Lichtleitfaser ausgebildete Lichtwellenleiter. Sie ist allerdings auch zur Ankopplung einer sogenannten Monitor-Photodiode an einen rückwärtigen Ausgang eines Halbleiter-Lasers geeignet. Für diese Anwendung ist in erster Linie die Reflektionsfreiheit wichtig, was durch die schräg verlaufende Fläche der Vertiefung erreicht wird.

Ausführungsbeispiele der Erfindung sind in der Zeichnung anhand mehrerer Figuren dargestellt und in der nachfolgenden Beschreibung näher erläutert. Es zeigen:

Fig. 1 einen Schnitt und

Fig. 2 eine Draufsicht eines ersten Ausführungsbeispiels,

Fig. 3 einen Schnitt und

Fig. 4 eine Draufsicht eines zweiten Ausführungsbeispiels.

Gleiche Teile sind in den Figuren mit gleichen Bezugszeichen versehen.

Bei beiden Ausführungsbeispielen ist an der Oberfläche einer Trägerplatte 1 aus Silizium eine V-förmige Nut 2 durch anisotropes Ätzen hergestellt. Die Oberfläche der Trägerplatte ist dabei parallel zu einer (100)-Ebene und die Richtung der V-förmigen Hut ist parallel zu einer ⟨110⟩-Richtung des Siliziums. Die Flanken der V-förmigen Nut 2 werden dann von (111)-Ebenen gebildet, so daß sich ein Böschungswinkel von $\alpha = 54{,}7°$ bildet.

Die V-förmige Nut 2 dient zur Aufnahme eines Endbereichs des Lichtwellenleiters 3, der optische Signale von einem nicht dargestellten Sender zuführt. Bei Verwendung einer Standard-Einzelmode-Faser als Lichtwellenleiter 3 hat dieser einen Kern 4 mit einem Durchmesser von $10\mu m$. Der Lichtwellenleiter 3 ist an seiner Stirnfläche 5 unter einem Winkel $\beta$ angeschrägt. Der Winkel $\beta$ ist der Winkel zwischen der Faserachse und der Normalen der Stirnfläche des Lichtwellenleiters 3. Vorzugsweise wird der Winkel $\beta = 90° - \alpha = 35{,}3°$ gewählt. Die V-förmige Nut 2 mündet in einer ebenfalls anisotrop geätzten Vertiefung 6, an deren der Nut 2 gegenüberliegenden Wand 7 eine Photodiode 8 angeordnet ist. Die Wände der Vertiefung 6 weisen den gleichen Böschungswinkel wie diejenigen der V-förmigen Nut 2 auf. Da die Photodiode 8 die Form einer quadratischen Platte mit konstanter Dikke aufweist, liegt die Lichteintrittsfläche der Photodiode 8 ebenfalls in einem Winkel von $54{,}7°$ schräg zur Oberfläche der Trägerplatte 1, bzw. in einem Winkel $\beta = 35{,}3°$ schräg zur optischen Achse des Lichtwellenleiters. Dadurch werden Rückreflexionen in den Lichtwellenleiter verhindert.

Der Lichtwellenleiter 3 wird azimutal so ausgerichtet, daß seine Stirnfläche parallel zur Lichteintrittsfläche der Photodiode liegt. Danach kann der Lichtwellenleiter 3 praktisch ganz an die Photodiode 8 herangeschoben werden, wobei möglicherweise durch Toleranzen bei der Herstellung der schrägen Stirnfläche 5 ein Spalt von wenigen $\mu m$ verbleibt. Dieser kann durch einen optisch transparenten Kleber, der auch zur Fixierung des Lichtwellenleiters 3 in der V-förmigen Nut 2 verwendet wird, ausgefüllt werden. Dadurch werden die Reflexionsverluste beim Lichtaustritt aus dem Lichtwellenleiter und beim Lichteintritt in die Photodiode vermindert. Bei diesem geringen Abstand tritt praktisch keine Aufweitung des austretenden Lichtstrahls auf.

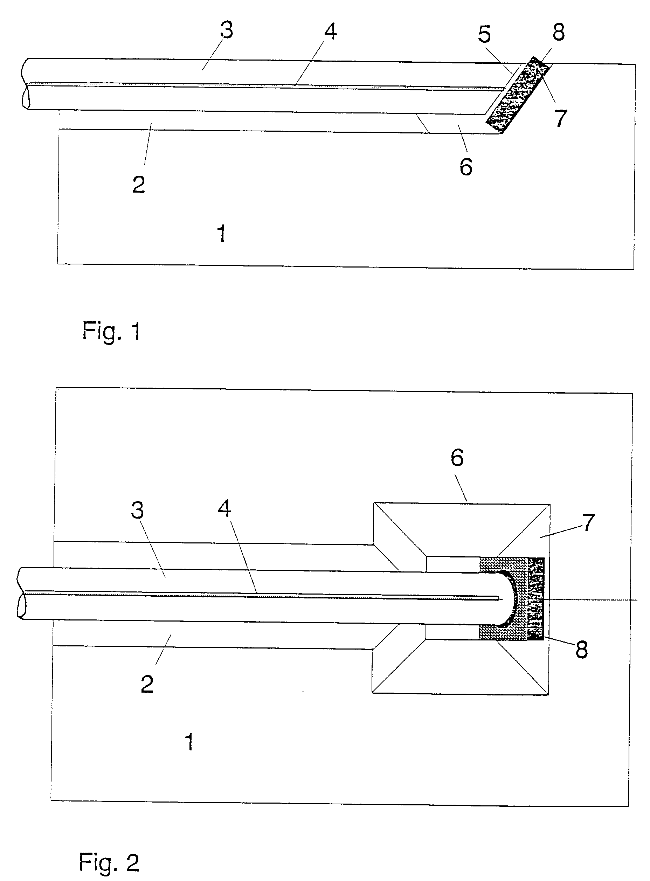

Bei dem Ausführungsbeispiel nach den Figuren 1 und 2 weist die Vertiefung 6 die Form eines Pyramidenstumpfes auf. Dieses kann dadurch erreicht werden, daß die anisotrope Ätzung nach einer definierten Zeit abgebrochen wird. Die Bodenfläche der Vertiefung 6 bildet dann eine zur Oberfläche der Trägerplatte 1 parallele Ebene in einer definierten Tiefe. Die Photodiode 8 wird, wie in den Figuren 1 und 2 dargestellt, so eingelegt, daß eine Seitenkante auf der Grundfläche der Vertiefung 6 aufliegt. Dadurch ist eine vertikale und eine seitliche Ausrichtung der Photodiode ohne zusätzlichen Spielraum mit der in der anisotropen Ätztechnik erreichbaren Genauigkeit von $\pm 2\mu m$ möglich. Die laterale Ausrichtung erhält man mit der gleichen Genauigkeit durch Anschlag der Photodiode 8 an eine der beiden Seitenflächen der Vertiefung 6.

Die Photodiode läßt sich hier also mit der für die anisotrope Ätztechnik erreichbaren Genauigkeit von $\pm 2\mu m$ relativ zur Faser ohne aktive Justage positionieren. Bei einem Kerndurchmesser von $10\mu m$ ergibt sich mit dieser Positioniertoleranz ein minimaler Durchmesser der aktiven Fläche der Photodiode von $14\mu m$. Wegen der damit verbundenen geringen Kapazitäten sind derartige Photodioden sehr schnell, was dem übertragbaren Nachrichtenfluß zugute kommt.

Selbst bei den zur Zeit gebräuchlichen Photodioden mit der kleinsten Lichteintrittsfläche von etwa einem Durchmesser von $30\mu m$ weist die Erfindung den Vorteil auf, daß die Dioden reflexionsfrei und ohne Justage eingesetzt werden, wobei durch Verwendung eines transparenten Klebers zwischen Faser und Photodiode der Kopplungswirkungsgrad durch Vermeidung von Reflexionsverlusten noch erhöht wird.

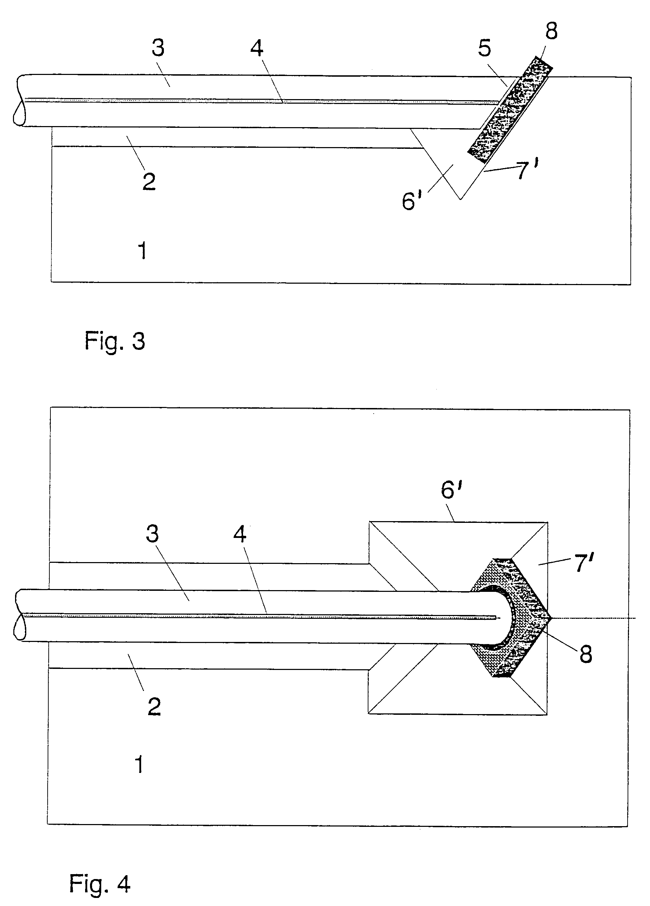

Bei dem in den Figuren 3 und 4 dargestellten Ausführungsbeispiel hat die Vertiefung 6' eine pyramidenförmige Gestalt. Die Flankenfläche 7' hat dabei die Form eines gleichseitigen Dreiecks. Die Photodiode 8, die üblicherweise eine quadratische Grundfläche besitzt, wird derart eingelegt, daß sie mit ihren diagonal gegenüberliegenden Ecken auf den beiden zur Stirnfläche 7 benachbarten Flächen der Vertiefung 6' aufsitzt.

Da die Kanten der Photodiode einen Winkel von $90°$ einschließen, kann die Photodiode noch um $\pm 15°$ innerhalb des gleichseitigen Dreiecks der Stirnfläche 7' gedreht werden. Bei dieser Drehung ändert sich jedoch die Lage des Mittelpunktes der Photodiode 8 nur sehr wenig. Eine geometrische Berechnung für die durch die Winkelunsicherheit von $\pm 15°$ maximal zu erwartende Dejustierung d der Photodiode 8 bezüglich der Mitte des Lichtwellenleiters 3 ergibt sich bei einer Kantenlänge a der Photodiode zu $d_h$ = ±0,106•a in horizontaler und zu $d_v$ = +0/-0,034•a in vertikaler Richtung.

Dies kann dazu ausgenutzt werden, daß bei Bedarf durch eine Drehung der Photodiode eine Feinstjustierung vorgenommen wird. Bei geringeren Genauigkeitsanforderungen ist trotz einer möglicherweise schräg eingesetzten Photodiode eine ausreichende Zuordnung zwischen Lichtwellenleiter und Photodiode gegeben und keine Justage erforderlich.

**Patentansprüche**

1. Vorrichtung zur optischen Kopplung eines Lichtwellenleiters mit einem optoelektrischen Wandler, wobei von einer Stirnfläche des Lichtwellenleiters Licht auf die Lichteintrittsfläche des optoelektrischen Wandlers fällt, dadurch gekennzeichnet,
daß die Stirnfläche des Lichtwellenleiters schräg verläuft und daß an der Oberfläche einer Trägerplatte (1) eine V-förmige Nut (2) angeordnet ist, die in eine Vertiefung (6, 6') ausläuft mit einer der Nut (2) gegenüberliegenden zur Oberfläche der Trägerplatte (1) schräg verlaufenden Wand (7, 7'), welche den optoelektrischen Wandler (8) derart trägt, daß die Lichteintrittsfläche und die Stirnfläche (5) im gleichen Winkel zur Oberfläche verlaufen.

2. Vorrichtung nach Anspruch 1, dadurch gekennzeichnet, daß die Vertiefung (6) die Form eines Pyramidenstumpfes aufweist, wobei eine parallel zur Oberfläche verlaufende Bodenfläche der Vertiefung (6) und die schräg verlaufende Wand (7) eine Anlagekante für den optoelektrischen Wandler (8) bilden.

3. Vorrichtung nach Anspruch 1, dadurch gekennzeichnet, daß die Vertiefung (6') die Form einer Pyramide bildet.

4. Vorrichtung nach einem der vorhergehenden Ansprüche, dadurch gekennzeichnet,
daß die Trägerplatte (1) aus Silizium besteht und daß die Wände der V-förmigen Nut (2) und die schräg verlaufende Wand (7, 7') jeweils mit der Oberfläche der Trägerplatte (1) einen Winkel von 54,7° einschließen und daß der Winkel zwischen der Achse des Lichtwellenleiters (3) und der Normalen der Stirnfläche (5) des Lichtwellenleiters (1) 35,3° beträgt.

5. Vorrichtung nach einem der vorhergehenden Ansprüche, dadurch gekennzeichnet,
daß die nicht vom Lichtwellenleiter (3) und vom optoelektrischen Wandler (8) eingenommenen Teile der Nut (2) und der Vertiefung (6, 6') von einem transparenten Kleber ausgefüllt sind.

6. Verfahren zur Herstellung einer Vorrichtung nach Anspruch 1, dadurch gekennzeichnet,
daß in eine Oberfläche eines Trägerplattenrohlings, die parallel zu einer (100)-Ebene liegt, die V-förmige Nut in Richtung parallel zu einer ⟨110⟩-Richtung anisotrop geätzt wird und daß die Vertiefung ebenfalls anisotrop geätzt wird.

7. Verfahren zur Herstellung einer Vorrichtung nach Anspruch 2, dadurch gekennzeichnet,
daß in eine Oberfläche eines Trägerplattenrohlings, die parallel zu einer (100)-Ebene liegt, die V-förmige Nut in Richtung parallel zu einer ⟨110⟩-Richtung anisotrop geätzt wird und daß die Vertiefung ebenfalls anisotrop geätzt wird, wobei der Ätzprozeß bei Erreichen einer vorgesehenen Tiefe der Vertiefung beendet wird.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 226 296 (BRITISH TELECOMMUNICATIONS PLC)<br>* Zusammenfassung; Abbildungen 1,2 *<br>--- | 1 | G02B6/42 |
| Y | DE-C-39 25 189 (MESSERSCHMIDT-BÖLKOW-BLOHM GMBH)<br>* Anspruch 1 *<br>--- | 1 | |
| A | IBM TECHNICAL DISCLOSURE BULLETIN,<br>Bd.22, Nr.7, Dezember 1979, NEW YORK US<br>Seiten 2935 - 2936<br>L.D.COMERFORD 'ETCHED SILCON STRUCTURE FOR ALIGNING A PHOTODIODE AND OPTICAL FIBER'<br>* das ganze Dokument *<br>--- | 1-3 | |
| A | PATENT ABSTRACTS OF JAPAN<br>vol. 10, no. 260 (P-494) 5. September 1986<br>& JP-A-61 087 112 (NIPPON TELEGR & TELEPH)<br>2. Mai 1986<br>* Zusammenfassung *<br>--- | 1 | |
| A | EP-A-0 419 767 (SIEMENS AG)<br>* Spalte 2, Zeile 2-35 *<br>----- | 4,6,7 | RECHERCHIERTE SACHGEBIETE (Int.Cl.5)<br><br>G02B |

Der vorliegende Recherchenbericht wurde für alle Patentansprüche erstellt

| Recherchenort | Abschlußdatum der Recherche | Prüfer |
|---|---|---|
| BERLIN | 28. April 1994 | Fuchs, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)